# EUROPÄISCHE PATENTANMELDUNG

(11) **EP 2 072 350 A1**
(43) Veröffentlichungstag der Anmeldung: **24.06.2009**
(21) Anmeldenummer: 08466031.5
(22) Anmeldetag: 11.12.2008
(51) Int. Cl.: B60R 22/18, B60R 22/24

(54) **Klinkehalter eines Sicherheitsgurts**

(30) Priorität: 17.12.2007 CZ 20070886
(71) Anmelder: Skoda Auto A.S., 293 60 Mladá Boleslav (CZ)
(72) Erfinder: Král, Jirí, 29306 Kosmonosy (CZ); Kusy, Petr, 29421 Belá pod Bezdezem (CZ)

(57) **Zusammenfassung**

Die Klinkenhalterung 30 des Sicherheitsgurts 7 wird durch eine Öffnung in der Radhausverkleidung 1, die Oberkante der Öffnung 3 und die gerade Fläche im unteren Teil der Öffnung 6 gebildet. Die Klinkenhalterung 10 des Sicherheitsgurts 1 ist in der Radhausverkleidung 2, in der Oberkante der Öffnung 3 und/ oder den Rippen 4 und der gerade Fläche im unteren Teil der Öffnung 6 befestigbar. Im Innenbereich - Abseite - der Radhausverkleidung 2 ist die Öffnungsabdeckung 5 befestigt.

## Beschreibung

### Technisches Gebiet

Die Erfindung betrifft den Klinkehalter des Sicherheitsgurts in der funktionsfreien Position, vor allem des hinteren Sicherheitsgurts, in der Öffnung in der Radhausverkleidung des Fahrzeugs.

### Bisheriger Stand der Technik

In der Praxis ist seitens des Stands der Technik die Fixierung des Sicherheitsgurts in der funktionsfreien Position durch einen zusätzlichen Clip oder Haken an der Außenseite der Verkleidung, oder mittels einer engen Öffnung in der Verkleidung, in welche der metallische Klinkenteile eingesteckt wird, welcher ansonsten zur Befestigung im Schloss dient, bekannt.

Nachteil ist, dass Clips und Haken sichtbare, heraustretende Elemente darstellen. Der Gurt muss in diese eingefädelt und beim Anschnallen wieder ausgefädelt werden. Die eine Öffnung zur Fixierung der metallischen Klinke der hinteren Sicherheitsgurte setzt wiederum voraus, dass der Gurt in der fixierten Position umgedreht (verdreht) ist und der Plastikteil der Klinke wird senkrecht in den Raum ragen.

### Darstellung der Erfindung

Die aufgeführten Unzulänglichkeiten beseitigt die technische Lösung laut der vorgelegten Erfindung. An der Außenseite der Verkleidung wird zur Fixierung der Klinke der hinteren Sicherheitsgurte kein herausstehendes oder zusätzliches Element (Clip, Haken, usw.) verwendet werden. Der Gurt muss nicht gedreht werden und die Klinke des Gurts steht nicht senkrecht in den Raum. Das Angurten und auch die Fixierung der Klinke sind einfach zu bedienen.

Die Klinke des hinteren Sicherheitsgurts ist in die Öffnung der Radhausverkleidung eingeschoben. Dadurch kommt es zu einer Fixierung des internen Sicherheitsgurts in der die Form der Radhausabdeckung kopierenden Position. Die Form der Öffnung in der Radhausverkleidung ist so konzipiert, dass der Schlitz der Klinke des internen Sicherheitsgurts in die obere Öffnungskante oder in die Formrippen im oberen Bereich der Öffnung einklinkt und parallel die Klinke von unten an diese Rippen mittels der geraden Fläche im unteren Öffnungsbereich angedrückt wird. Zur Vermeidung der Durchsicht durch die Öffnung in der Radhausverkleidung in den Innenbereich der Karosserie ist auf der Außenseite an der Radhausverkleidung eine Abdeckung befestigt.

### Figurenübersicht der Zeichnung

Die Erfindung wird näher mittels der schematischen Zeichnungen erläutert, wobei in denen die Figur 1 die räumliche Ansicht auf die Klinkenhalterung des Sicherheitsgurts in der Radhausverkleidung darstellt. In der Fig. 2 befindet sich die räumliche Ansicht auf die Klinkenhalterung des Sicherheitsgurts in der Radhausverkleidung mit befestigter Klinke. In der Fig. 3 befindet sich die Klinkenhalterung des Sicherheitsgurts in der Radhausverkleidung mit im Schlitz befestigter Klinke.

### Ausführungsbeispiel der Erfindung

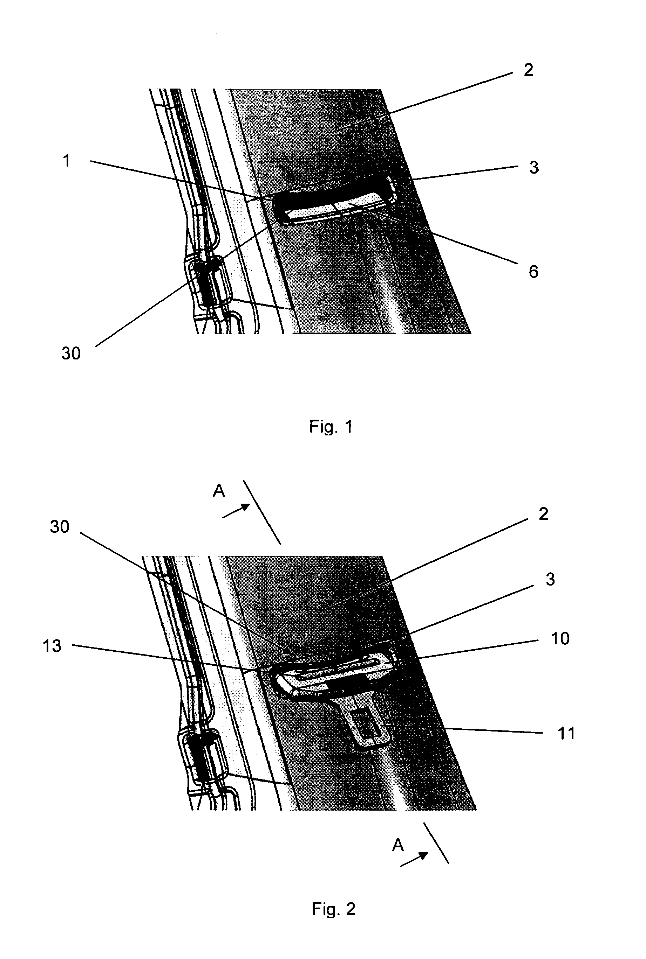

In der Fig. 1 befindet sich die räumliche Ansicht auf die Klinkenhalterung 30 des Sicherheitsgurts 7 in der Radhausverkleidung 2. Diese befindet sich auf der rechten Seite des rechten seitlichen Sitzes der hinteren Sitzreihe und/ oder auf der linken Seite des linken seitlichen Sitzes der hinteren Sitzreihe annähernd auf der Höhe der Schultern oder des Ellenbogens des Beifahrers.

Die Klinkenhalterung 30 des Sicherheitsgurts 7 wird durch eine Öffnung in der Radhausverkleidung 1, die Oberkante der Öffnung 3 und die gerade Fläche im unteren Teil der Öffnung 6 gebildet.

In der Fig. 2 befindet sich die räumliche Ansicht auf die Klinkenhalterung 30 des Sicherheitsgurts 7 in der Radhausverkleidung 2 mit befestigter Klinke 10.

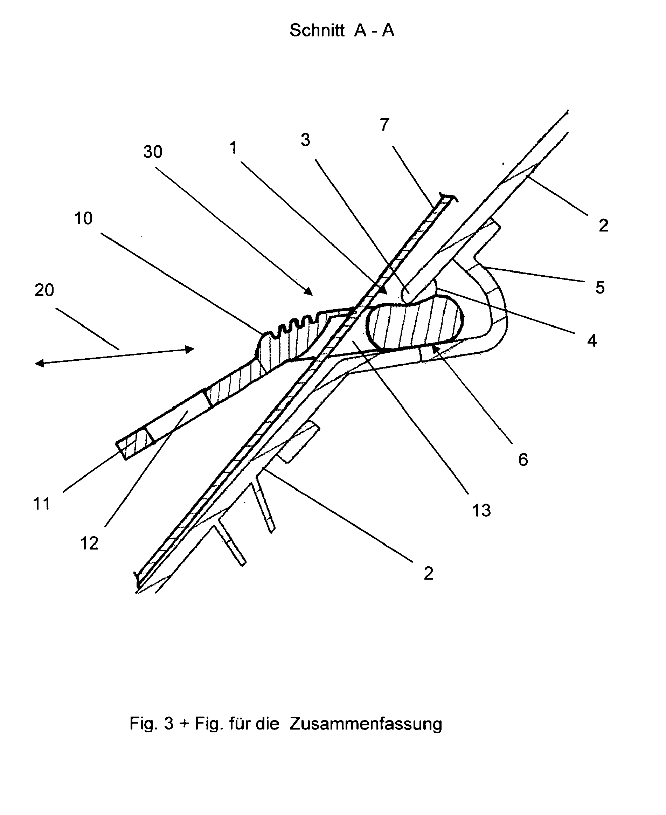

In der Fig. 3 befindet sich die Klinkenhalterung 30 des Sicherheitsgurts 7 in der Radhausverkleidung 2 mit im Schlitz befestigter Klinke 10 im Schnitt A-A. Die Klinke des Sicherheitsgurts 10 ist hier, ähnlich wie in der Darstellung 2, in der funktionslosen Position fixiert. Die Klinkenhalterung 10 des Sicherheitsgurts 1 wird durch eine Öffnung in der Radhausverkleidung 2, die Oberkante der Öffnung 3 und/ oder die Rippen 4 und die gerade Fläche im unteren Teil der Öffnung 6 gebildet. Der Sicherheitsgurt 7 befindet sich in fixierter Position so, dass dieser die Form der Radhausverkleidung 2 kopiert.

Im Innenbereich - Abseite - der Radhausverkleidung 2 ist die Öffnungsabdeckung 5 befestigt.

### Liste der Bezugskennzeichnungen

- 1: Öffnung in der Radhausverkleidung
- 2: Radhausverkleidung
- 3: Obere Öffnungskante
- 4: Rippen
- 5: Abdeckung
- 6: Gerade Fläche des unteren Öffnungsbereichs
- 7: Sicherheitsgurt
- 10: Klinke des Sicherheitsgurts
- 11: Metallischer Teil der Klinke
- 12: Öffnung im metallischen Teil der Klinke
- 13: Öffnung in der Klinke
- 20: Betätigungsrichtung der Klinke
- 30: Klinkenhalterung

## Patentansprüche

1. Die Klinkenhalterung (30) des Sicherheitsgurts (7) **dadurch gekennzeichnet, dass** diese durch eine Öffnung in der Radhausverkleidung (1), die Oberkante der Öffnung (3) und die gerade Fläche im unteren Teil der Öffnung (6) gebildet wird.

2. Die Klinkenhalterung (30) des Sicherheitsgurts (7) laut des Anspruchs 1 **dadurch gekennzeichnet, dass** die Klinke (10) des Sicherheitsgurts (7) in der Öffnung (1) in der Radhausverkleidung (2) zwischen der Oberkante (3) und der graden Fläche des unteren Öffnungsteils befestigbar ist.

3. Die Klinkenhalterung (30) des Sicherheitsgurts (7) laut des Anspruchs 1 **dadurch gekennzeichnet, dass** die Klinke (10) des Sicherheitsgurts (7) in der Öffnung (1) in der Radhausverkleidung (2) zwischen der Rippe (4) in der Öffnungsoberkante (3) und der graden Fläche des unteren Öffnungsteils (6) befestigbar ist.

4. Die Klinkenhalterung (30) des Sicherheitsgurts (7) laut der vorangegangenen Ansprüche **dadurch gekennzeichnet, dass** im Innenbereich der Radhausverkleidung (2) die Offnungsabdeckung (5) befestigt ist.
